# EUROPEAN PATENT SPECIFICATION

(11) **EP 3 434 708 B1**
(45) Date of publication and mention of the grant of the patent: **07.09.2022**
(21) Application number: 17769952.7
(22) Date of filing: 09.03.2017
(51) Int. Cl.: C08G 59/24, B32B 27/38, C08J 5/18, C08L 63/00

(54) **FILM AND IMAGE DISPLAY DEVICE**
FILM- UND BILDANZEIGEVORRICHTUNG
FILM ET DISPOSITIF D'AFFICHAGE D'IMAGES

(30) Priority: 24.03.2016 JP 2016060687
(43) Date of publication of application: 30.01.2019
(73) Proprietor: Toppan Printing Co., Ltd., Tokyo 110-0016 (JP)
(72) Inventor: HIRATA, Tatsu, Tokyo 110-0016 (JP)
(74) Representative: TBK
(86) International application number: PCT/JP2017/009522
(87) International publication number: WO 2017/163907

(56) References cited:
- WO-A1-2006/064736
- WO-A1-2011/001788
- CN-A- 102 030 885
- JP-A- H0 971 636
- JP-A- 2005 126 497
- JP-A- 2009 179 709
- JP-A- 2009 198 959
- JP-A- 2011 153 212
- JP-A- 2014 215 472
- JP-A- 2015 030 839
- US-A- 5 770 268

## Description

### [Technical Field]

The present invention relates to a film and an image display device using the same.

### [Background Art]

For flat panel displays such as a liquid crystal display, a plasma display and an electroluminescent (EL) display, weight and thickness reduction are still in progress. As a measure for further promoting the thinning and weight saving, studies have been made on the replacement of a glass substrate with a plastic film. The replacement of the glass substrate with a plastic film not only enables a flat panel display to be made thinner and lighter in weight, but also can lead to imparting such properties as the unlikelihood of cracking and flexibility to the flat panel display.

Recently, there have been proposed transparent films, which are obtained by impregnating glass fiber cloth with a transparent resin composition and curing the resin composition (see JP 2004-307851 A, JP 2009-066931 A and JP 2011-93966 A). For the manufacture of such a transparent film, the resin composition should be one that is obtained by blending a high refractive index resin having a refractive index greater than that of glass fibers and a low refractive resin having a refractive index lower than that of the glass fibers in such a way that the refractive index of the resulting cured product of a transparent resin approximates the refractive index of the glass fibers. Subsequently, the glass fiber cloth is impregnated with the resin composition and dried for semi-curing the resin composition to obtain a prepreg. This prepreg is subjected to pressure forming under heating to obtain a transparent film. The high and low refractive index resins used are an epoxy resin or the like, respectively. In order to improve heat resistance, an imide resin is mixed in the resin composition.

As set out above, since the refractive index of the glass fibers and the refractive index of the cured product of the resin composition are substantially matched with each other, optical refraction within the transparent film can be suppressed. With respect to optical characteristics, such a transparent film is suited for use in a display that is required to have excellent visibility. Attention has been paid to this transparent film usable as a material that is able to impart such properties as adhesion with a conductive film such as an indium tin oxide (ITO) film, surface smoothness and gas barrier properties, along with general physical properties, such as transparency and dimensional stability, required for liquid crystal displays and the like. JP2005126497 discloses transparent resin compositions comprising a cycloaliphatic epoxy resin, a polyol compound and an acid generator.

To obtain a transparent film ensuring excellent hardness and transparency, it has been proposed that a temperature prior to the step of curing a resin composition containing an epoxy resin is set at a level lower than a specified temperature (JP 2015-30839 A).

### [Summary of the Invention]

However, any of the above-described techniques either need a substrate such as glass fiber cloth, or have room for improvement with respect to flexibility. The use of the glass fiber cloth is disadvantageous in transparency and cost. Insufficient flexibility places limitations on the application of the transparent film. In order to enable wide applications of the transparent film, the transparent film should also have a satisfactory heat resistance.

Accordingly, the present invention has for its object the provision of a film which can be manufactured inexpensively and is provided as a self-supporting film excellent in transparency, heat resistance and flexibility.

According to a first aspect of the present invention, there is provided a film which is a transparent self-supporting film, which has a single layer structure, a thickness within a range of from 1 to 250 µm and is made of a cured product of a resin composition comprising an alicyclic epoxy resin (A), a polyol compound (B), and an acid generator (C), wherein an amount ratio of the alicyclic epoxy resin (A) to a total amount of the alicyclic epoxy resin (A) and the polyol compound (B) is within a range of from 70 to 75 mass%, and an amount of the acid generator (C) is within a range of from 0.05 to 0.1 parts by mass per 100 parts by mass of a total amount of the alicyclic epoxy compound (A) and the polyol compound (B), and wherein the polyol compound (B) has a number average molecular weight within a range of from 200 to 100,000 g/mol and a hydroxyl group value within a range of from 190 to 550 KOH mg/g.

According to a second aspect of the invention, there is provided a multilayer film including two or more layers forming a multilayer structure, at least one of which is made of the film defined in the first aspect.

According to a third aspect of the invention, there is provided an optical film comprising the film defined in the first aspect and one or more layers formed on the film and selected from the group consisting of a low reflection layer, an anti-glare film and a hard coat layer.

According to a fourth aspect of the invention, there is provided an image display device comprising the film defined in the first aspect, the multilayer film defined in the second aspect, or the optical film defined in the third aspect.

### [Brief Description of the Drawings]

Fig. 1 is a sectional view schematically showing a film according to one embodiment of the present invention.
Fig. 2 is a schematic view schematically showing an example of a film manufacturing apparatus.
Fig. 3 is a sectional view schematically showing an application example of the film shown in Fig. 1.

### [Description of the Embodiments]

The embodiments of the invention will now be described in detail. In this regard, however, the present invention should not be construed as being limited to the following embodiments.

### <Film>

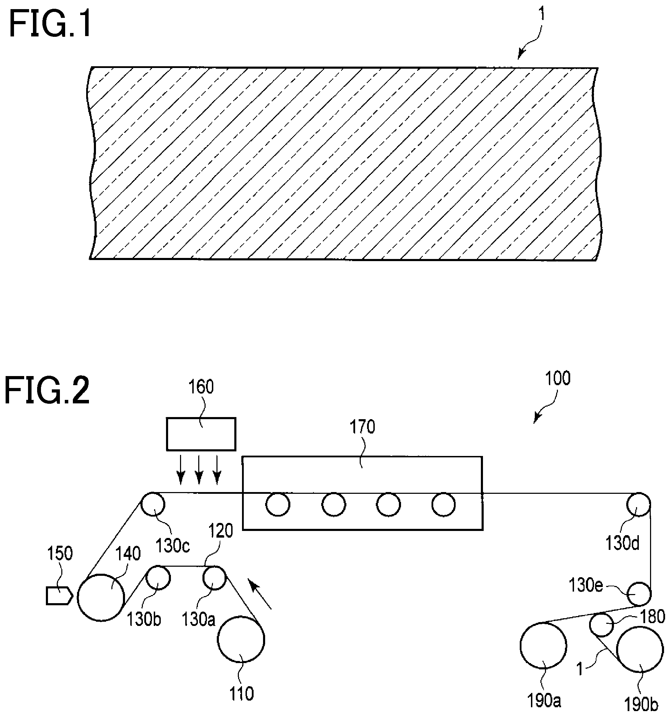

Fig. 1 is a sectional view schematically showing a film related to an embodiment of the invention.

This film 1 is a transparent self-supporting film having a single layer structure. The term "self-supporting" used herein means a film which can be handled by itself without the aid of a support such as a substrate. The term "film" used herein means an article having a thin-layer form and flexibility, with no concept of thickness.

The film 1 is made of a cured product of a resin composition described below. More particularly, the film 1 does not contain any woven or non-woven fabrics formed of a variety of materials including glass, metal, carbon, protein, cellulose and synthetic resin, or a porous layer made of such a material as indicated above.

### <Resin composition>

The resin composition contains an alicyclic epoxy resin (A), a polyol compound (B) and an acid generator (C). The individual components are described below.

### [Alicyclic epoxy compound (A)]

The alicyclic epoxy compound (A) is one containing an alicyclic (aliphatic cyclic) epoxy structure and an epoxy group in the molecule. The epoxy group may be constituted of two adjacent carbon atoms and an oxygen atom in the alicyclic ring (such an epoxy group is hereinafter referred to as "alicyclic epoxy group"), or may be one directly attached to an alicyclic ring through a single bond.

The number of the alicyclic structures in one molecule of the alicyclic epoxy compound (A) may be one, or two or more. The number of the epoxy groups in one molecule of the alicyclic epoxy compound (A) may be one, or two or more. In one instance, the alicyclic epoxy resin (A) is one which contains two alicyclic structures and two epoxy groups in one molecule wherein these epoxy groups are, respectively, alicyclic epoxy groups containing carbon atoms of different alicyclic structures.

A usable compound having the alicyclic epoxy group can be arbitrarily selected from known and conventional ones. Preferably, the compound having an alicyclic epoxy group is one having an epoxy group constituted of two adjacent carbon atoms and an oxygen atom in a cyclohexane ring, i.e. a compound having a cyclohexene oxide group.

The compound having an alicyclic epoxy group preferably includes an alicyclic epoxy compound (alicyclic epoxy resin) represented by the following general formula (I), particularly from the standpoint of heat resistance, light fastness and transparency. In general, epoxy compounds are excellent in heat resistance. However, epoxy compounds having a benzene ring, such as bisphenol A-type epoxy compounds, have a conjugated double bond, so that they are inferior in transparency to epoxy resins having no conjugated double bond. When the alicyclic epoxy compound represented by the following general formula (I) is used, especially high transparency can be achieved.

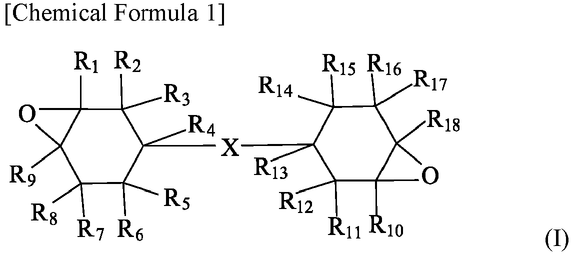

In the above general formula (I), Ri to R₁₈ independently represent a group selected from the group consisting of a hydrogen atom, a halogen atom and an organic group.

The organic group may be, for example, a hydrocarbon group, a group consisting of carbon and halogen atoms, or a group containing a heteroatom, such as a halogen atom, an oxygen atom, a sulfur atom, a nitrogen atom or a silicon atom, along with carbon and hydrogen atoms. Examples of the halogen atom include a chlorine atom, a bromine atom, an iodine atom, and a fluorine atom.

The organic group preferably includes a hydrocarbon group, a group made of carbon, hydrogen and oxygen atoms, a halogenated hydrocarbon group, a group made of carbon, oxygen and halogen atoms, and a group made of carbon, hydrogen, oxygen and halogen atoms. Where the organic group is a hydrocarbon group, the hydrocarbon group may be an aromatic hydrocarbon group, an aliphatic hydrocarbon group, and a group containing both an aromatic skeleton and an aliphatic skeleton.

Specific examples of the hydrocarbon group include chain alkyl groups such as a methyl group, an ethyl group, an n-propyl group, an isopropyl group, an n-butyl group, an isobutyl group, a sec-butyl group, a tert-butyl group, an n-pentyl group, an n-hexyl group, an n-heptyl group, an n-octyl group, a 2-ethylhexyl group, an n-nonyl group, an n-decyl group, an n-undecyl group, an n-tridecyl group, an n-tetradecyl group, an n-pentadecyl group, an n-hexadecyl group, an n-heptadecyl group, an n-octadecyl group, an n-nonadecyl group, and an n-icosyl group; chain alkenyl groups such as a vinyl group, a 1-propenyl group, a 2-n-propenyl group (allyl group), a 1-n-butenyl group, a 2-n-butenyl group, and a 3-n-butenyl group; cycloalkyl groups such as a cyclopropyl group, a cyclobutyl group, a cyclopentyl group, a cyclohexyl group, and a cycloheptyl group; aryl groups such as a phenyl group, an o-tolyl group, a m-tolyl group, a p-tolyl group, an α-naphthyl group, a β-naphtyl group, a biphenyl-4-yl group, a biphenyl-3-yl group, a biphenyl-2-yl group, an anthryl group, and a phenanthryl group; and aralkyl groups such as a benzyl group, a phenethyl group, an α-naphthylmethyl group, a β-naphthylmethyl group, an α-naphthylethyl group, and a β-naphthylethyl group.

Specific examples of the halogenated hydrocarbon group include a chain halogenated alkyl group such as a chloromethyl group, a dichloromethyl group, a trichloromethyl group, a bromomethyl group, dibromomethyl group, a tribromomethyl group, a fluoromethyl group, a difluoromethyl group, a trifluoromethyl group, a 2,2,2-trifluoroethyl group, a pentafluoroethyl group, a heptafluoropropyl group, a perfluorobutyl group, a perfluoropentyl group, a perfluorohexyl group, a perfluoroheptyl group, a perfluorooctyl group, a perfluorononyl group, a perfluorodecyl or the like; a halogenated cycloalkyl group such as a 2-chlorocyclohexyl group, a 3-chlorocyclohexyl group, a 4-chlorocyclohexyl group, a 2,4-dichlorocyclohexyl group, a 2-bromocyclohexyl group, a 3-bromocyclohexyl group, a 4-bromocyclohexyl group or the like; a halogenated aryl group such as a 2-chlorophenyl group, a 3-chlorophenyl group, a 4-chlorophenyl group, a 2,3-dichlorophenyl group, a 2,4-dichlorophenyl group, a 2,5-dichlorophenyl group, a 2,6-dichlorophenyl group, a 3,4-dichlorophenyl group, a 3,5-dichlorophenyl group, a 2-bromophenyl group, a 3-bromophenyl group, a 4-bromophenyl group or the like; and a halogenated aralkyl group such as a 2-chlorophenylmethyl group, a 3-chlorophenylmethyl group, a 4-chlorophenylmethyl group, a 2-bromophenylmethyl group, a 3-bromophenylmethyl group, a 4-bromophenylmethyl group, a 2-fluorophenylmethyl group, a 3-fluorophenylmethyl group, a 4-fluorophenylmethyl group or the like.

Specific examples of the group consisting of carbon, hydrogen and oxygen atoms include a chain hydroxy alkyl group such as a hydroxymethyl group, a 2-hydroxyethyl group, a 3-hydroxy-n-propyl group, a 4-hydroxy-n-butyl group or the like; a hydroxycyclohexyl group such as a 2-hydroxycyclohexyl group, a 3-hydroxycyclohexyl group, a 4-hydroxycyclohexyl group or the like; a hydroxyaryl group such as a 2-hydroxyphenyl group, a 3-hydroxyphenyl group, a 4-hydroxyphenyl group, a 2,3-dihydroxyphenyl group, a 2,4-dihydroxyphenyl group, a 2,5-dihydroxyphenyl group, a 2,6-dihydroxyphenyl group, a 3,4-dihydroxyphenyl group, a 3,5-dihydroxyphenyl group or the like; a hydroxyaralkyl group such as 2-hydroxyphenylmethyl group, a 3-hydroxyphenylmethyl group and a 4-hydroxyphenylmethyl group or the like; a chain alkoxy group such as a methoxy group, an ethoxy group, an n-propyloxy group, an isopropyloxy group, an n-butyloxy group, an isobutyloxy group, a sec-butyloxy group, a tert-butyloxy group, an n-pentyloxy group, an n-hexyloxy group, an heptyloxy group, an n-octyloxy group, a 2-ethylhexyloxy group, an n-nonyloxy group, an n-decyloxy group, an n-undecyloxy group, an n-tridecyloxy group, an n-tetradecyloxy group, an n-pentadecyloxy group, an n-hexadecyloxy group, an n-heptadecyloxy group, n-octadecyloxy group, n-nonadecyloxy group, and an n-icosyloxy group; chain alkenyloxy groups such as a vinyloxy group, a 1-propenyloxy group, a 2-n-propenyloxy group (allyloxy group), a 1-n-butenyloxy group, a 2-n-butenyloxy group, and a 3-n-butenyloxy group; an aryloxy group such as a phenoxy group, an o-tolyloxy group, a m-tolyloxy group, a p-tolyloxy group, an α-naphthyloxy group, a β-naphthyloxy group, a biphenyl-4-yloxy group, a biphenyl-3-yloxy group, a biphenyl-2-yloxy group, an anthryloxy group, a phenanthryloxy group or the like; an aralkyloxy group such as a benzyloxy group, a phenethyloxy group, an α-naphthymethyloxy group, a β-naphthylmethyloxy group, an α-naphthyethyloxy group, a β-naphthylethyloxy group or the like; an alkoxyalkyl group such as a methoxymethyl group, an ethoxymethyl group, an n-propyloxymethyl group, a 2-methoxyethyl group, a 2-ethoxyethyl group, a 2-n-propyloxyethyl group, a 3-methoxy-n-propyl group, a 3-ethoxy-n-propyl group, a 3-n-propyloxy-n-propyl group, a 4-methoxy-n-butyl group, a 4-ethoxy-n-butyl group, a 4-n-propyloxy-n-butyl group or the like; an alkoxyalkoxy group such as a methoxymethoxy group, an ethoxymethoxy group, an n-propyloxymethoxy group, a 2-methoxyethoxy group, a 2-ethoxyethoxy group, a 2-n-propyloxyethoxy group, a 3-methoxy-n-propyloxy group, a 3-ethoxy-n-propyloxy group, a 3-n-propyloxy-n-propyloxy group, a 4-methoxy-n-butyloxy group, a 4-ethoxy-n-butyloxy group, a 4-n-propyloxy-n-butyloxy group or the like; an alkoxyaryl group such as a 2-methoxylphenyl group, a 3-methoxylphenyl group, a 4-methoxylphenyl group or the like; an alkoxyaryloxy group such as a 2-methoxylphenoxy group, a 3-methoxyphenoxy group, a 4-methoxyphenoxy group or the like; an aliphatic acyl group such as a formyl group, an acetyl group, a propionyl group, a butanoyl group, a pentanoyl group, a hexanoyl group, a heptanoyl group, an octanoyl group, a nonanoyl group, a decanoyl group or the like; an aromatic acyl group such as a benzoyl group, an α-naphthoyl group, a β-naphthoyl group or the like; a chain alkyloxycarbonyl group such as a methoxycarbonyl group, an ethoxycarbonyl group, an n-propyloxycabonyl group, an n-butyloxycarbonyl group, an n-pentyloxycarbonyl group, an n-hexyloxycarbonyl group, an n-heptyloxycarbonyl group, an n-octyloxycarbonyl group, an n-nonyloxycarbonyl group, an n-decyloxycarbonyl group or the like; an aryloxycarbonyl group such as a phenoxycarbonyl group, an α-naphthoxycarbonyl group, a β-naphthoxycarbonyl group or the like; an aliphatic acyloxy group such as a formyloxy group, an acetyloxy group, a propionyloxy group, a butanoyloxy group, a pentanoyloxy group, a hexanoyloxy group, a heptanoyloxy group, an octanoyloxy group, a nonanoyloxy group, a decanoyloxy group or the like; and an aromatic acyloxy group such as a benzoyloxy group, an α-naphthoyloxy group, a β-naphthoyloxy group or the like.

All of the Ri to R₁₈ should more preferably be a hydrogen atom especially in view of the hardness of a cured product obtained by use of a curable composition.

In the above general formula (I), X is a single bond or a linking group (i.e. a divalent group having one or more atoms).

The linking group includes, for example, a divalent hydrocarbon group, a carbonyl group, an ether group (ether bond), a thioether group (thioether bond), an ester group (ester bond), a carbonate group (carbonate bond), an amido group (amido bond), and groups of the type wherein a plurality of the above groups are linked together.

The divalent hydrocarbon group includes, for example, a linear or branched chain alkylene group having 1 to 18 carbon atoms, and a divalent alicyclic hydrocarbon group.

Examples of the linear or branched chain alkylene group having from 1 to 18 carbon atoms include a methylene group, a methylmethylene group, a dimethylmethylene group, an ethylene group, a propylene group and a trimethylene group. Examples of the divalent alicyclic hydrocarbon group include divalent cycloalkylene groups (including cycloalkylidene groups) such as a 1,2-cyclopentylene group, a 1,3-cyclopentylene group, a cyclopentylidene group, a 1,2-cyclohexylene group, a 1,3-cyclohexylene group, a 1,4-cyclohexylene group, a cyclohexylidene group and the like.

The linking group X is preferably a linking group containing an oxygen atom. Such linking groups include, for example, -CO- (carbonyl group), -O-CO-O- (carbonate group), -COO- (ester group), -O- (ether group), -CONH- (amido group), groups formed by linking a plurality of the groups indicated above, and groups formed by linking one, or two or more of the above groups with one, or two or more divalent hydrocarbon groups. Examples of the divalent hydrocarbon group include, for example, those groups mentioned above.

The alicyclic epoxy resin represented by the general formula (I) includes, for example, commercially available products obtained under the commercial names of "Celloxide 2021P" and "Celloxide 2081" (both manufactured by Daicel Corporation). As an alicyclic epoxy compound represented by the general formula (I) wherein X is a single bond, there can be used, for example, a commercially sold product available under the commercial name of "Celloxide 8000" (manufactured by Daicel Corporation).

The alicyclic epoxy compounds (A) may be used singly or in combination of two or more. Of those mentioned above, it is preferred to use, as the alicyclic epoxy compound (A), at least one of 3', 4'-epoxycyclohexylmethyl-3,4-epoxycyclohexane carboxylate (commercial name: "Celloxide 2021P") and ε-caprolactone-modified 3', 4'- epoxycyclohexylmethyl - 3,4-epoxycyclohexane carboxylate.

The amount ratio of the alicyclic epoxy compound (A) to the total amount of the alicyclic epoxy compound (A) and the polyol compound (B) is within a range of from 70 to 75 mass%. If this ratio is smaller, there is the possibility that the cured product of the resulting resin composition becomes low in crosslink density and thus, a high heat resistance cannot be obtained. If the ratio is larger, the cured product of the resin composition becomes hard and brittle in nature, with the possibility that high flexibility cannot be obtained.

### [Polyol compound (B)]

When the polyol compound (B) is contained in the resin composition, there can be formed a cured product having high flexibility. Moreover, it becomes possible to provide a sheet capable of being self-supported by using only a cured product of the resin composition.

The polyol compound (B) means a polymer (an oligomer or polymer) having two or more hydroxyl groups in one molecule and a number average molecule weight of, for example, not less than 200. The polyol compound (B) includes, for example, a polyether polyol, a polyester polyol and a polycarbonate polyol. It will be noted that the polyol compounds may be used singly or in combination of two or more.

The hydroxyl groups (two or more hydroxyl groups) of the polyol compound (B) may be an alcoholic hydroxyl group or a phenolic hydroxyl group. The number of the hydroxyl groups of the polyol compound (B) in one molecule is not specifically limited so far as two or more hydroxyl groups are present.

Although the positions of the hydroxyl groups (two or more hydroxyl groups) in the polyol compound (B) are not specifically limited, it is preferred that the hydroxyl group is present at at least one terminal end of the polyol molecule (the terminal end of the polymer main chain) from the viewpoint of reactivity with a curing agent. The presence at at least both terminal ends of the polyol molecule is more preferred.

The polyol compound (B) may be one which is able to form a liquid resin composition after formulation with other types of components, and may be either solid or liquid in nature.

The number average molecular weight of the polyol compound (B) is from 200 to 100,000 and preferably from 300 to 1000. If the average number molecular weight is smaller, the resulting film may undergo breakage and cracking when the film made of the cured product of a resin composition is peeled off from a substrate on which the resin composition has been coated. On the other hand, if the average number molecular weight is larger, the polyol compound in a liquid resin composition may be settled or may not be dissolved in other components. It is to be noted that the number average molecular weight of the polyol compound (B) means a number average molecular weight measured according to gel permeation chromatography (GPC) based on a polystyrene standard.

The polyol compound (B) has a hydroxyl group value within a range of from 190 to 550 KOH mg/g. If the hydroxyl group value is smaller, the cured product of the resulting resin composition becomes low in crosslink density, with the possibility of not obtaining a high heat resistance. If the hydroxyl group value is larger, the amount of the hydroxyl group becomes excessive relative to the amount of an epoxy group, so that free monomer that does not contribute to reaction may remain in the cured product. Eventually, a thermogravimetric change may become great, with the possibility of lowering heat resistance along with causing an increase in hygroscopicity.

Examples of the polyol compound (B) include a polyester polyol (including a polyester polyol oligomer) having an ester skeleton (polyester skeleton) in the molecule, a polyether polyol (including a polyether polyol oligomer) having an ether skeleton (polyether skeleton), and a polycarbonate polyol (including a polycarbonate polyol oligomer) having a polycarbonate skeleton in the molecule. Besides, the polyol compound (B) may include, for example, other compounds such as phenoxy resins, high molecular weight bisphenol A type epoxy resins whose epoxy equivalent exceeds 1000 g/eq., polybutadienes having a hydroxyl group, and acrylic polyols.

The polyester polyol includes, for example, polyester polyols obtained by condensation polymerization between polyols and polycarboxylic acids (polybasic acids) or of hydroxycarboxylic acids (e.g. through ester exchange reaction), or polyester polyols obtained by ring opening polymerization of lactones.

The polyols used for the condensation reaction to obtain the polyester polyols include, for example, ethylene glycol, diethylene glycol, 1,2-propanediol, 2-methyl-1,3-propanediol, 1,3-propanediol, 1,4-butanediol, 1,3-butanediol, 2,3-butanediol, 1,5-pentanediol, 2-methyl-1,5-pentanediol, 3-methyl-1,5-pentanediol, 2,3,5-trimethyl-1,5-pentanediol, 1,6-hexanediol, 2-ethyl-1,6-hexanediol, 2,2,4-trimethyl-1,6-hexanediol, 2,6-hexanediol, 1,8-octanediol, 1,4-cyclohexanedimethanol, 1,2-dimethylol cyclohexane, 1,3-dimethylol cyclohexane, 1,4-dimethylol cyclohexane, 1,12-dodecanediol, polybutadienediol, neopentyl glycol, tetramethylene glycol, propylene glycol, dipropylene glycol, glycerine, trimethylolpropane, 1,3-dihydroxyacetone, hexylene glycol, 1,2,6-hexanetriol, ditrimethylolpropane, mannitol, sorbitol and pentaerythritol.

The polycarboxylic acids used for the condensation polymerization to obtain the polyester polyols include, for example, oxalic acid, adipic acid, sebacic acid, fumaric acid, malonic acid, succinic acid, glutaric acid, azelaic acid, citric acid, 2,6-naphthalenedicarboxylic acid, phthalic acid, isophthalic acid, terephthalic acid, citraconic acid, 1,10-decanedicarboxylic acid, methylhexahydrophthalic acid anhydride, hexahydrophthalic acid anhydride, methyltetrahydrophthalic acid anhydride, tetrahydrophthalic acid anhydride, anhydrous pyromellitic acid and anhydrous trimellitic acid.

The hydroxycarboxylic acids used for the condensation polymerization to obtain the polyester polyols include, for example, lactic acid, malic acid, glycolic acid, dimethylolpropionic acid and dimethylolbutanoic acid.

The lactones used for the ring opening polymerization to obtain the polyester polyols include, for example, ε-caprolactone, δ-valerolactone and γ-butyrolactone.

Usable polyester polyols include commercial products available under the commercial names of "Placcel 205", "Placcel 205H", "Placcel 205U", "Placcel 205BA", "Placcel 208", "Placcel 210", "Placcel 210CP", "Placcel 210BA", "Placcel 212", "Placcel 212CP", "Placcel 220", "Placcel 220CPB", "Placcel 220NP1", "Placcel 220BA", "Placcel 220ED", "Placcel 220EB", "Placcel 220EC", "Placcel 230", "Placcel 230CP", "Placcel 240", "Placcel 240CP", "Placcel 210N", "Placcel 220N", "Placcel L205AL", "Placcel L208AL", "Placcel L212AL", "Placcel L220AL", "Placcel L230AL", "Placcel 305", "Placcel 308", "Placcel 312", "Placcel L312AL", "Placcel 320", "Placcel L320AL", "Placcel L330AL", "Placcel 410", "Placcel 410D", "Placcel 610", "Placcel P3403" and "Placcel CDE9P" (all manufactured by Daicel Corporation).

The polyether polyol includes, for example, a polyether polyol obtained by addition reaction of a cyclic ether compound with a polyol, and a polyether polyol obtained by ring-opening polymerization of an alkylene oxide.

The polyether polyols more specifically include, for example, oligomers of polyols such as ethylene glycol, diethylene glycol, 1,2-propanediol (propylene glycol), 2-methyl-1,3-propanediol, 1,3-propanediol, 1,4-butandiol (tetramethylene glycol), 1,3-butanediol, 2,3-butanediol, 1,5-pentanediol, 2-methyl-1,5-pentanediol, 3-methyl-1,5-pentanediol, 2,3,5-trimethyl-1,5-pentanediol, 1,6-hexanediol, 2-ethyl-1,6-hexanediol, 2,2,4-trimethyl-1,6-hexanediol, 2,6-hexanediol, 1,8-octanediol, 1,4-cyclohexanedimethanol, 1,2-dimethylolcyclohexane, 1,3-dimethylolcyclohexane, 1,4-dimethylolcyclohexane, 1,12-dodecanediol, polybutadienediol, neopentyl glycol, dipropylene glycol, glycerine, trimethylolpropane, 1,3-dihydroxyacetone, hexylene glycol, 1,2,6-hexanetriol, ditrimethylolpropane, mannitol, sorbitol and pentaerythritol; adducts between the above polyols and alkylene oxides such as ethylene oxide, propylene oxide, 1,2-butylene oxide, 1,3-butylene oxide, 2,3 butylene oxide, tetrahydrofuran and epichlorohydrin; and ring-opened polymers of cyclic ethers such as tetrahydrofuran (e.g. polytetramethylene glycol).

As such polyether polyols, there can be used commercially sold products available under the commercial names of, for example, "PEP-101" (manufactured by Freund Co., Ltd.); "Adeka Pluronic L", "Adeka Pluronic P", "Adeka Pluronic F", "Adeka Pluronic R", "Adeka Pluronic TR" and "Adeka Pluronic PEG" (all manufactured by Adeka Corporation); "PEG#1000", "PEG#1500", and "PEG#11000" (all manufactured by NOF Corporation); "New Pole PE-34", "New Pole PE-61", "New Pole PE-78", "New Pole PE-108", "PEG-200", "PEG-600", "PEG-2000", "PEG-6000", "PEG-10000" and "PEG-20000" (all manufactured by Sanyo Chemical Industries, Ltd.); "PTMG1000", "PTMG1800", and "PTMG2000" (all manufactured by Mitsubishi Chemical Corporation; and "PTMG Prepolymer" (manufactured by Mitsubishi Plastics, Inc.)

The polycarbonate polyol indicated above is a polycarbonate having two or more hydroxyl groups in the molecule. Especially, a preferred polycarbonate polyol includes a polycarbonate diol having two terminal hydroxyl groups in the molecule.

The polycarbonate polyol can be prepared according to a process of preparing an ordinary polycarbonate polyol, such as a phosgene process or a carbonate exchange reaction making use of a dialkyl carbonate such as dimethyl carbonate or diethyl carbonate or diphenyl carbonate (see JP S62-187725 A, JP H2-175721 A, JP H2-49025A, JP H3-220233 A, JP H3-252420 A and the like). The carbonate bond in the polycarbonate polyol is unlikely to undergo thermal decomposition, so that the cured product of a resin composition containing a polycarbonate polyol shows excellent stability even under high temperature and high humidity conditions.

The polyols used for the carbonate exchange reaction with the dialkyl carbonate or diphenyl carbonate include, for example, 1,6-hexanediol, ethylene glycol, diethylene glycol, 1,3-propanediol, 1,4-butanediol, 1,3-butanediol, 2,3-butanediol, 1,5-pentanediol, 3-methyl-1,5-pentanediol, 1,4-cyclohexanedimethanol, 1,8- octanediol, 1,9-nonanediol, 1,12-dodecanediol, butadienediol, neopentyl glycol, tetramethylene glycol, and propylene glycol.

As such a polycarbonate polyol, there can be used commercially sold products available under the commercial names of "Placcel CD205PL", "Placcel CD205HL", "Placcel CD210PL", "Placcel CD210HL", "Placcel CD220PL" and "Placcel CD220HL" (all manufactured by Daicel Corporation); "UH-CARB50", "UC-CARB100", "UH-CARB300", "UH-CARB90 (1/3)", "UH-CARB90 (1/1)" and "UC-CARB100" (all manufactured by Ube Industries, Ltd.); and "PCDL T4671", "PCDL T4672", "PCDL T5650J", "PCDL T5651" and "PCDL T5652" (all manufactured by Asahi Kasei Chemicals Corporation).

Polyols other than the foregoing polyether polyols, polyester polyols and polycarbonate polyols include commercial products such, for example, as phenoxy resins available under the commercial names of "YP-50", "YP-50S", "YP-55U", "YP-70", "ZX-1356-2", "YPB-43C", "YPB -43M", "FX-316", "FX-310T40", "FX-280S", "FX-293", "YPS-007A30" and "TX-1016" (all manufactured by Nippon Steel Chemical Co., Ltd.), and "jER 1256", "jER 4250" and "jER 4275" (both manufactured by Mitsubishi Chemical Corporation); bisphenol type polymer-epoxy resins having an epoxy equivalent exceeding 1000 g/eq., and available under the commercial names of "Epototo YD-014", "Epototo YD-017", "Epototo YD-019", "Epototo YD-020G", "Epototo YD-904", "Epototo YD-907" and "Epototo YD-6020" (all manufactured by Nippon Steel Chemical Co., LTD.), and "jER1007", "jER1009", "jER1010", "jER1005F", "jER1009F", "jER1006FS" and "jER1007FS" (all manufactured by Mitsubishi Chemical Corporation); polybutadienes having a hydroxyl group and available under the commercial names of "Poly bd R-45HT", "Poly bd R-15HT", "Poly ip" and KRASOL" (all manufactured by Idemitsu Kosan Co., Ltd.), and polybutadienes having a hydroxyl group and available under the commercial names of "α-ω Polybutadiene Glycol G-1000", "α-ω Polybutadiene Glycol G-2000" and "α-ω Polybutadiene Glycol G-3000" (all manufactured by Nippon Soda Co., Ltd.); and acrylic polyols available under the commercial names of "Hitaroid 3903", "Hitaroid 3904", "Hitaroid 3905", "Hitaroid 6500", "Hitaroid 6500B" and "Hitaroid 3018X" (all manufactured by Hitachi Chemical Co., Ltd.), "Acrydic DL-1537", "Acrydic BL-616", "Acrydic AL-1157", "Acrydic A-322", "Acrydic A-817", "Acrydic A-870", "Acrydic A-859-B", "Acrydic A-829" and "Acrydic A-49-394-IM" (all manufactured by DIC Corporation), and "Dianal SR-1346", "Dianal SR-1237" and "Dianal AS-1139" (all manufactured by Mitsubishi Rayon Co., Ltd.)

It will be noted that the foregoing polyols may be used singly or in combination of two or more. The polyol compound (B) is especially preferably made of at least one of a polycaprolactonetriol which is a polyester polyol available, for example, under the commercial names of "Praccell 305" and "Praccell 308" (both manufactured by Dicel Corporation), and a carbonate diol available under the commercial name of "Praccell CD205PL" (manufactured by Dicel Corporation).

The amount ratio of the polyol compound (B) to the total of the alicyclic epoxy compound (A) and the polyol compound (B) is within a range of from 25 to 30 mass%, both inclusive. If this ratio is smaller, the cured product of the resulting resin composition becomes hard and brittle in nature, with the possibility that high flexibility cannot be obtained. If the ratio is larger, the cured product of the resin composition becomes low in crosslink density and the amount of the hydroxyl group relative to the epoxy group becomes excessive, with the possibility that the resin composition can not be cured adequately.

### [Acid generator (C)]

The acid generator (C) serves to initiate the polymerization of a compound having an epoxy group in the resin composition. A preferred acid generator (C) includes a cationic polymerization initiator which is able to generate cationic species by irradiation with ionizing radiation irradiation such as UV irradiation or by thermal treatment so as to initiate the polymerization of the alicyclic epoxy compound (A). The acid generators (C) may be used singly or in combination of two or more.

The cationic polymerization initiators capable of generating cationic species by irradiation of ionizing radiation include, for example, a hexafluoroantimonate salt, a pentafluorohydroxyantimonate salt, a hexafluorophosphate salt, a hexafluoroarsenate salt, a triarylsulfonium salt and derivatives thereof, and a diaryliodonium salt and derivatives thereof.

Examples of the triarylsulfonium salt and its derivative include a triarylsulfonium hexafluorophosphate salt and its derivative, and a triarylsulfonium hexafluoroantimonate salt and a derivative thereof

Examples of the diaryliodonium salt and its derivatives include the diaryl iodoniumhexafluorophosphate salt and a derivative thereof, and a diaryl iodoniumtetrafluoroborate salt and a derivative thereof.

These cationic polymerization initiators (cationic catalysts) may be used singly or in combination of two or more.

As such a cationic polymerization initiator, there can be used commercial products available under the commercial names of "UVACURE 1590" (manufactured by Dicell Saitech Co., Ltd.); "CD-1010", "CD-1011" and CD-1012" (all manufactured by Satomer USA, Inc.); "Irgacure 264" and "Irgacure 250" (both manufactured by Ciba Japan Co., Ltd.); "CIT-1682" (manufactured by Nippon Soda Co., Ltd.); "CPI-101A", "CPI-100P", "CPI-210S" and "CPI-110A" (all manufactured by San-Apro Ltd.); "Adekaoptomer-SP-170", "Adekaoptomer-SP-172" and "Adekaoptomer-SP-150" (all manufactured by Adeka Corporation); and "Silicolease UV CATA211" (manufactured by Arakawa Chemical Industries, Ltd.). Preferably, mention may be made of one or more of the products under the commercial names of "SP-170" and "SP-172" (both manufactured by Adeka Corporation); and "CPI-210S", "CPI-101A" and "CPI-110A" (all manufactured by San-Apro, Ltd.)

The cationic polymerization initiator capable of generating cationic species by being subjected to thermal treatment includes, for example, an aryldiazonium salt, an aryliodonium salt, an arylsulfonium salt, and an allene-ion complex.

As such a cationic polymerization initiator, there can be used commercially sold products under the names of "PP-33", "CP-66" and "CP-77" (all manufactured by Adeka Corporation); "FC-509" (manufactured by Three-M Corporation); "UVE1014" (manufactured by G.E. corporation); "San-Aid SI-60L", "San-Aid SI-80L", "San-Aid SI-100L", "San-Aid SI-110L" and "San-Aid SI-150L" (all manufactured by Sanshin Chemical Industry Co., Ltd.); and "CG-24-61" (manufactured by Ciba Japan Inc.)

Further, there may be used, as the cationic polymerization initiator, a compound obtained from a chelate compound of a metal, such as aluminum or titanium, and acetoacetic acid or a diketone and a silanol such as triphenylsilanol, and a compound obtained from a chelate compound of a metal, such as aluminum or titanium, and acetoacetic acid or a diketone and a phenol such as bisphenol S.

The amount of the acid generator (C) is within a range of from 0.05 to 0.1 part by mass, per 100 parts by mass of the total amount of the alicyclic epoxy compound (A) and the polyol compound (B). If the amount of the acid generator (C) is smaller, the cured product of the resulting resin composition becomes small in crosslink density, with the possibility that a high heat resistance cannot be obtained. If the amount of the acid generator (C) is larger, there is the possibility that a cured product having high transparency cannot be obtained.

### [Other components (D)]

The resin composition may further comprise other components (D), if necessary.

For example, the resin composition may further contain a cationic reactive compound, such as a vinyl ether compound, so as to adjust curability. Moreover, the resin composition may further contain an oxetane compound for causing low viscosity or adjusting reaction speed. In addition, the resin composition may further contain a radical reactive compound so as to adjust the adhesion between a substrate and a cured layer of the resin composition.

The resin composition may further comprise, as other component, one or more of additives including, for example, an antioxidant, a UV absorber, a light stabilizer (HALS or the like), a delusting agent (silica, glass powder, metal oxide or the like), a colorant (a dye, a pigment or the like), an optical diffuser, a low-contraction agent, an anti-settling agent, a defoaming agent, an antistatic agent, an anti-clouding agent, a dispersant, a thickening agent, a sag inhibitor, a drying agent, a levelling agent, a coupling agent, an adhesion promoter, an anti-corrosive pigment, a thermal stabilizer, a film improver, a slipping agent, an anti-scratch agent, a plasticizer, an antibacterial agent, an anti-mold agent, a stain inhibitor, a flame retardant, a polymerization inhibitor, a photopolymerization promoter, a sensitizer, a thermal initiator (thermal cationic polymerization initiator or thermal radical polymerization initiator), a release agent and the like.

The amount of the component (D) is preferably not larger than 10 parts by mass, more preferably not larger than 1 part by mass, per 100 parts by mass of the alicyclic epoxy compound (A) and the polyol compound (B) in total.

### <Preparation of resin composition>

The resin composition is obtained by uniformly mixing the components set out above. For the mixing, there can be used mixers including, for example, a disper mixer, an ultra mixer, a homogenizer and a defoaming planetary mixer although it is not limited thereto. In order to prevent the activation of the acid generator, the mixing should preferably be carried out in an environment where ionization radiation is not irradiated.

### <Preparation of film>

The film 1 shown in Fig. 1 is obtained, for example, by forming a coating film made of the resin composition on a support, irradiating an ionization radiation on the film, prebaking the film to cure the film, and subsequently peeling the cured film from the support. For the preparation of the film 1, there can be used, for example, an apparatus shown in Fig. 2.

Fig. 2 is a schematic view showing an example of a film preparation apparatus. This film preparation apparatus 100 is a roll-to-roll type die coater. This film preparation apparatus includes an unwind roll 110, a carrier film 120, guide rolls 130a to 130e, a backup roll 140, a die head 150, an ionization radiation irradiator 160, a heater 170, a peeling-off roll 180, and winding rolls 190a, 190b.

The carrier film 120 is wound on the unwind roll 110 and unwound from the unwind roll 110.

The carrier film 120 has a belt shape. The resin composition is applied onto the carrier film 120, and the coating film made of the resin film is cured on the carrier film 120.

The carrier film 120 is one which is able to releasably support the cured product of the resin composition. Examples of the carrier film 120 include a polyester film, a polyethylene film, a polypropylene film, films made of cellulose esters or derivatives thereof and including cellophane, a cellulose diacetate film, a cellulose acetate butyrate film, a cellulose acetate phthalate film, a cellulose acetate propionate film (cap film), a cellulose triacetate film and a cellulose nitrate, a polyvinylidene chloride film, a polyvinyl alcohol film, an ethylene vinyl alcohol film, a syndiotactic polystyrene film, a polycarbonate film, a norbornene resin film, a polymethylpentene film, a polyether ketone film, a polyether sulfone film, a polysulfone film, a polyether ketone imide film, a polyamide film, a fluorine resin film, a nylon film, a polymethyl methacrylate film, an acrylic film, and a polyarylate film.

Although not limited thereto, the thickness of the carrier film 120 is preferably within a range of from 6 to 700 µm, more preferably from 40 to 250 µm, and much more preferably from 50 to 150 µm.

The guide rolls 130a to 130e guide the carrier film 120 unwound from the unwind roll 110 successively to a region between the die head 150 and the backup roll 140, a region in front of the ionization radiation irradiator 160, the heater 170, and the winding roll 190a.

The backup roll 140 is set in face-to-face relation with the die head 150. The backup roll 140 is rolled in contact with the back surface of the carrier film 120 that passes between the die head 150 and the backup roll 140 and plays a role of keeping a constant distance between the carrier film 120 and the die head 150.

The die head 150 acts to supply the resin composition on the surface of the carrier film 120 passing between the die head 150 and the backup roll 140. In this way, the coating film made of the resin composition is formed on the surface of the carrier film 120.

Although there has been illustrated herein a die coating method making use of the die head 150 for the coating of the resin composition, other resin composition coating methods may be used. For the coating of the resin composition, there can be used well known methods including, for example, a dipping method, a method using a wire bar, a roll coating method, a gravure coating method, a reverse coating method, an air knife coating method, a comma coating method, a curtain coating method, a screen printing method, a spray coating method, and a gravure offset printing method.

The thickness of the coating film made of the resin composition after curing, i.e. the thickness of the film 1, is within a range of from 1 to 250 µm. If the thickness is smaller, the resulting film becomes low in strength, so that there is the high risk that the film 1 may be broken down when peeled off from the carrier film 120. On the contrary, if larger, the heat of reaction becomes so high that the storage modulus of the resulting cured product becomes very high, with the result that the film 1 becomes hard and brittle in nature, thus leading to the possibility of unsatisfactory flexibility.

The ionizing radiation irradiator 160 is set facing the surface of the carrier film 120. The ionizing radiation is irradiated onto the coating film on the carrier film 120. Where the carrier film 120 is one that allows the ionizing radiation to be transmitted, the ionizing radiation irradiator 160 may be provided so as to face the back surface of the carrier film 120.

The term "ionizing radiation" used herein means a high-energy radiation, which is able to decompose (ionize) the component contained in the resin composition, and particularly the acid generator thereby generating an acid in the resin composition, e.g. an X ray or UV light. A typically employed ionizing radiation is UV light.

The ionizing radiation irradiator 160 can activate the acid generator contained in the resin composition by irradiation of an ionizing radiation onto the coating film. More particularly, the acid generator is decomposed (ionized) to generate an acid in the resin composition. The acid serves as a catalyst for promoting the polymerization or crosslinking reaction in the resin composition. Accordingly, when an ionizing radiation is irradiated onto the coating film, polymerization or crosslinking formation proceeds in the resin composition, resulting in the curing of the coating film.

The light source of the ionizing radiation irradiator 160 should be appropriately selected from those capable of radiating light with a wavelength suited for the decomposition of the acid generator (C). A lamp capable of radiating a wavelength of not greater than 400 nm is preferred for use as the light source. Examples of such a lamp include a chemical lamp, a low pressure mercury lamp, a high pressure mercury lamp, a metal halide lamp and a visible light halogen lamp.

The irradiation of ionizing radiation may be carried out in air or in an inert gas such as nitrogen, argon or the like.

The integrated quantity of ionizing radiation is preferably within a range of from 10 to 3000 mJ/cm², more preferably from 100 to 1000 mJ/cm² and much more preferably from 200 to 500 mJ/cm².

The heater 170 is used to post-bake the coating film that has been irradiated with the ionizing radiation. By the post-baking, the above reaction can be completed in the resin composition. The post-baking enables to the film 1 to be increased in crosslink density thereby increasing its heat resistance.

For the heating with the heater 170, heating methods including, for example, hot air drying, hot roll drying, high frequency irradiation and IR irradiation can be used singly or in combination of two or more. The heating temperature is preferably within a range of 80 to 160°C. The heating time is preferably within a range of 30 to 600 seconds.

The peeling roll 180 is set so as to roll on the film 1 supported with the carrier film 120. The peeling roll 180 works in such a way as to cause the moving direction of the film 1 to differ abruptly and greatly relative to the moving direction of the carrier film 120. Eventually, the film 1 is peeled off from the carrier film 120.

The winding roll 190a winds up the carrier film 120, from which the film 1 has been peeled off. The winding roll 190b wind up the film 1 peeled off from the carrier film 120.

The winding roll 190a imparts a tension to the carrier film 120. The tension imparted to the carrier film 120 by the winding roll 190a may differ depending on the thickness of and the type of material for the carrier film 120 and is preferably within a range of 10 to 500 N/m.

The film 1 is prepared in the following way, for example.

As stated hereinabove, the film 1 does not include a substrate such as a glass fiber cloth. Accordingly, when compared with a film including a substrate such as a glass fiber cloth, this film 1 is advantageous in transparency and cost reduction. The film 1 is obtained from such a resin composition as set out before. The film 1 is excellent in transparency, heat resistance and flexibility. More particularly, the film 1 can be produced inexpensively and is a self-supporting one excellent in transparency, heat resistance and flexibility.

### <Application example of the film>

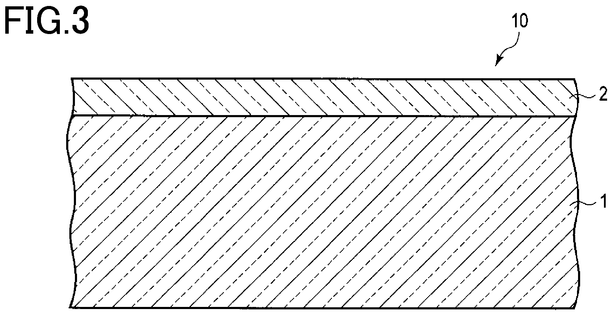

Fig. 3 is a sectional view schematically showing an application example of the film shown in Fig. 1.

In Fig. 3, a multilayer film 10 including the film 1 shown in Fig. 1 is depicted. The multiplayer film 10 is, for example, an optical film.

The multilayer film 10 includes, aside from the film 1 used as a first layer, a second layer 2. The film 1 and the second layer 2 form a multilayer structure. It will be noted that although Fig. 3 depicts only the second layer 2 as a layer other than the film 1, the multilayer film 10 may include two or more layers other than the film 1.

The second layer 2 may be made of a self-supporting film, or may be a film that cannot be handled singly on its own. In the latter case, the film 1 serves as a substrate for the second layer 2.

The second layer 2 is, for example, a low reflection layer, an anti-glare film or a hard coat layer. Where the multilayer film 10 includes two or more layers other than the film 1, the two or more layers other than the film 1 may include two or more members selected from a low reflection layer, an anti-glare layer and a hard coat layer.

As stated above, the film 1 can be produced inexpensively and is excellent in transparency, heat resistance and flexibility. Accordingly, the multilayer film 10 obtained by use of this film 1 can also be produced inexpensively and can have excellent transparency, heat resistance and flexibility.

Such a film 1 and multilayer film as set out above can be used in an image display device such as, for example, a flat panel display. These flat panel displays include, for example, a liquid crystal display, a plasma display and an EL display. In the image display devices, the film 1 or the multilayer film 10 can be used as a protective film, or a substrate such as a TFT (thin film transistor) substrate, a color filter substrate, a sealing substrate or the like.

Examples of the invention are now described below. In this regard, however, the present invention should not be construed as limited to the examples described below.

### <Example 1 - Reference Example useful to understand the invention>

The film 1 shown in Fig. 1 was prepared according to the following procedure.

Initially, 80 parts by mass of an alicyclic epoxy compound (A), 20 parts by mass of a polyol compound (B), and 0.05 parts by mass of an acid generator (C) were agitated for 15 minutes by use of a defoaming planetary mixer (Mazerustar KK5000, manufactured by Kurabo Industries, Ltd.) to prepare a coating solution. The alicyclic epoxy compound (A) used was Celloxide 2021P (manufactured by Daicel Corporation). The polyol compound (B) used was Placcel 305 (manufactured by Daicel Corporation). The acid generator (C) used was Adekaoptomer SP-170 (manufactured by Adeka Corporation).

Next, this coating solution was used to prepare a 50 µm thick film 1 according to a procedure illustrated with reference to Fig. 2. A 250 µm thick polyethylene terephthalate (PET) sheet (Melinex S, manufactured by Teijin Limited) was used as a carrier film 120. The light source of an ionizing radiation irradiator 160 used was a high pressure mercury lamp (manufactured by Eye Graphics Co., Ltd.). Light exposure was carried out so that an integrated quantity of the radiation was 500 mJ/cm². The post baking was performed at 150°C over 180 seconds. It should be noted that the carrier film 120 was wound up at a tension of 50 N/m.

### <Examples 2 to 38 and Comparative Examples 1 to 31 - Examples 2 to 9, 12, 16, 19 and 20 to 38 are Reference Examples useful to understand the invention>

Films were prepared in the same manner as in Example 1 except that the formulations of the resin composition were changed as shown in Tables 1 to 6.

It should be noted that in Tables 1 to 6, the terms "2021P" and "2081" indicated at the column of "Celloxide" mean Celloxide 2021P and 2081 (both manufactured by Daicel Corporation), respectively. Likewise, the terms "305", "308" and "CD205PL" indicated at the column of "'Placcel", respectively, mean "Praccel 305, 308 and CD205PL (all manufactured by Daicel Corporation). The terms "SP-170" and "CPI-110A" indicated at the column of "(C) Acid generator" mean Adekaoptomer SP-170 (manufactured by Adeka Limited) and CPI-110A (manufactured by San-Apro Ltd.), respectively.

### <Comparative Example 32>

A film was prepared in the same manner as in Example 1 using a radical curing composition of BS575CB (manufactured by Arakawa Chemical Industries, Ltd.) as a resin composition.

### <Comparative Example 33>

A commercially available film of Lumilar T60#75 (manufactured by Toray Industries, Inc.) was provided.

### <Evaluation methods>

### (Transparency)

A spectral transmittance meter (UV-visible Spectrophotometer UV2450, manufactured by Shimadzu Corporation) was used to measure a transmittance of film at a measurement wavelength of 400 nm. The transmittance was also measured in the same manner as mentioned above after having allowed a film to stand in an environment of 200°C for 60 minutes.

The transparency of film was judged according to the following standards. More particularly, the case that an initial transmittance was not less than 90% and a reduction rate of the transmittance measured after the lapse of 60 minutes at 200°C relative to the initial transmittance was not larger than 1% was judged as "○". A case where the initial transmittance was less than 90%, or the reduction rate of the transmittance measured after the lapse of 60 minutes at 200°C relative to the initial transmittance exceeded 1%, was judged as "×".

### (Heat resistance)

Using a thermogravimetric/differential thermal analyzer (TG-DTA 6200, manufactured by Hitachi High-Tech Science Corporation), thermogravimetric change of film was measured. The measuring conditions were such that an amount of sample was 10 mg, a measuring temperature was from 25 to 300°C, a temperature rising speed was 10°C/minute, a sampling pitch was 3 seconds, and a measuring atmosphere was under purge of nitrogen.

The heat resistance of film was judged according to the following standards. More particularly, when a mass change relative to an initial mass at 270°C was not larger than 2% and a film shape was kept, such a film was judged as "○". The case that a mass change relative to the initial mass at 270°C exceeded 2%, or a film shape was not kept such as by melting was judged as "×".

### (Flexibility)

Using a mandrel testing machine, a film was wound on a rod having a diameter of 0.4 mm. A film undergoing cracking was judged as "×". A cracking-free film was judged as "○".

The results of the evaluations are summarized in Tables 1 to 6 below.

**[Table 1]**

| | Formulation of resin composition (parts by mass) | | | | | | | Transparency | Heat resistance | Flexibility |
|---|---|---|---|---|---|---|---|---|---|---|
| | Alicyclic epoxy compound (A) | | Polyol compound (B) | | | Acid generator (C) | | | | |
| | Celloxide | | Placcel | | | SP-170 | CPI-110A | | | |
| | 2021P | 2081 | 305 | 308 | CD205PL | | | | | |
| Example 1 | 80 | 0 | 20 | 0 | 0 | 0.05 | 0 | ○ | ○ | ○ |
| Example 2 | 80 | 0 | 20 | 0 | 0 | 0.1 | 0 | ○ | ○ | ○ |
| Example 3 | 80 | 0 | 20 | 0 | 0 | 0.5 | 0 | ○ | ○ | ○ |
| Example 4 | 80 | 0 | 0 | 20 | 0 | 0.05 | 0 | ○ | ○ | ○ |
| Example 5 | 80 | 0 | 0 | 20 | 0 | 0.1 | 0 | ○ | ○ | ○ |
| Example 6 | 80 | 0 | 0 | 20 | 0 | 0.5 | 0 | ○ | ○ | ○ |
| Example 7 | 80 | 0 | 0 | 0 | 20 | 0.05 | 0 | ○ | ○ | ○ |
| Example 8 | 80 | 0 | 0 | 0 | 20 | 0.1 | 0 | ○ | ○ | ○ |
| Example 9 | 80 | 0 | 0 | 0 | 20 | 0.5 | 0 | ○ | ○ | ○ |
| Example 10 | 70 | 0 | 30 | 0 | 0 | 0.05 | 0 | ○ | ○ | ○ |
| Example 11 | 70 | 0 | 30 | 0 | 0 | 0.1 | 0 | ○ | ○ | ○ |
| Example 12 | 70 | 0 | 30 | 0 | 0 | 0.5 | 0 | ○ | ○ | ○ |
| Example 13 | 70 | 0 | 30 | 0 | 0 | 0 | 0.5 | ○ | ○ | ○ |

**[Table 2]**

| | Formulation of resin composition (parts by mass) | | | | | | | Transparency | Heat resistance | Flexibility |
|---|---|---|---|---|---|---|---|---|---|---|
| | Alicyclic epoxy compound (A) | | Polyol compound (B) | | | Acid generator (C) | | | | |
| | Celloxide | | Placcel | | | SP-170 | CPI-110A | | | |
| | 2021P | 2081 | 305 | 308 | CD205PL | | | | | |
| Example 14 | 70 | 0 | 0 | 30 | 0 | 0.05 | 0 | ○ | ○ | ○ |
| Example 15 | 70 | 0 | 0 | 30 | 0 | 0.1 | 0 | ○ | ○ | ○ |
| Example 16 | 70 | 0 | 0 | 30 | 0 | 0.5 | 0 | ○ | ○ | ○ |
| Example 17 | 70 | 0 | 0 | 0 | 30 | 0.05 | 0 | ○ | ○ | ○ |
| Example 18 | 70 | 0 | 0 | 0 | 30 | 0.1 | 0 | ○ | ○ | ○ |
| Example 19 | 70 | 0 | 0 | 0 | 30 | 0.5 | 0 | ○ | ○ | ○ |
| Example 20 | 60 | 0 | 40 | 0 | 0 | 0.05 | 0 | ○ | ○ | ○ |
| Example 21 | 60 | 0 | 40 | 0 | 0 | 0.1 | 0 | ○ | ○ | ○ |
| Example 22 | 60 | 0 | 40 | 0 | 0 | 0.5 | 0 | ○ | ○ | ○ |
| Example 23 | 60 | 0 | 0 | 40 | 0 | 0.05 | 0 | ○ | ○ | ○ |
| Example 24 | 60 | 0 | 0 | 40 | 0 | 0.1 | 0 | ○ | ○ | ○ |
| Example 25 | 60 | 0 | 0 | 40 | 0 | 0.5 | 0 | ○ | ○ | ○ |

**[Table 3]**

| | Formulation of resin composition (parts by mass) | | | | | | | Transparency | Heat resistance | Flexibility |
|---|---|---|---|---|---|---|---|---|---|---|
| | Alicyclic epoxy compound (A) | | Polyol compound (B) | | | Acid generator (C) | | | | |
| | Celloxide | | Placcel | | | SP-170 | CPI-110A | | | |
| | 2021P | 2081 | 305 | 308 | CD205PL | | | | | |
| Example 26 | 60 | 0 | 0 | 0 | 40 | 0.05 | 0 | ○ | ○ | ○ |
| Example 27 | 60 | 0 | 0 | 0 | 40 | 0.1 | 0 | ○ | ○ | ○ |
| Example 28 | 60 | 0 | 0 | 0 | 40 | 0.5 | 0 | ○ | ○ | ○ |
| Example 29 | 50 | 0 | 50 | 0 | 0 | 0.05 | 0 | ○ | ○ | ○ |
| Example 30 | 50 | 0 | 50 | 0 | 0 | 0.1 | 0 | ○ | ○ | ○ |
| Example 31 | 50 | 0 | 50 | 0 | 0 | 0.5 | 0 | ○ | ○ | ○ |
| Example 32 | 50 | 0 | 0 | 50 | 0 | 0.05 | 0 | ○ | ○ | ○ |
| Example 33 | 50 | 0 | 0 | 50 | 0 | 0.1 | 0 | ○ | ○ | ○ |
| Example 34 | 50 | 0 | 0 | 50 | 0 | 0.5 | 0 | ○ | ○ | ○ |
| Example 35 | 50 | 0 | 0 | 0 | 50 | 0.05 | 0 | ○ | ○ | ○ |
| Example 36 | 50 | 0 | 0 | 0 | 50 | 0.1 | 0 | ○ | ○ | ○ |
| Example 37 | 50 | 0 | 0 | 0 | 50 | 0.5 | 0 | ○ | ○ | ○ |
| Example 38 | 0 | 80 | 20 | 0 | 0 | 0.5 | 0 | ○ | ○ | ○ |

**[Table 4]**

| | Formulation of resin composition (parts by mass) | | | | | | | Transparency | Heat resistance | Flexibility |
|---|---|---|---|---|---|---|---|---|---|---|
| | Alicyclic epoxy compound (A) | | Polyol compound (B) | | | Acid generator (C) | | | | |
| | Celloxide | | Placcel | | | SP-170 | CPI-110A | | | |
| | 2021P | 2081 | 305 | 308 | CD205PL | | | | | |
| Comparative Example 1 | 80 | 0 | 20 | 0 | 0 | 0.01 | 0 | ○ | × | ○ |
| Comparative Example 2 | 80 | 0 | 20 | 0 | 0 | 1 | 0 | × | ○ | ○ |
| Comparative Example 3 | 80 | 0 | 0 | 20 | 0 | 0.01 | 0 | ○ | × | ○ |
| Comparative Example 4 | 80 | 0 | 0 | 20 | 0 | 1 | 0 | × | ○ | ○ |
| Comparative Example 5 | 80 | 0 | 0 | 0 | 20 | 0.01 | 0 | ○ | × | ○ |
| Comparative Example 6 | 80 | 0 | 0 | 0 | 20 | 1 | 0 | × | ○ | ○ |
| Comparative Example 7 | 70 | 0 | 30 | 0 | 0 | 0.01 | 0 | ○ | × | ○ |
| Comparative Example 8 | 70 | 0 | 30 | 0 | 0 | 1 | 0 | × | ○ | ○ |
| Comparative Example 9 | 70 | 0 | 0 | 30 | 0 | 0.01 | 0 | ○ | × | ○ |
| Comparative Example 10 | 70 | 0 | 0 | 30 | 0 | 1 | 0 | × | ○ | ○ |
| Comparative Example 11 | 70 | 0 | 0 | 0 | 30 | 0.01 | 0 | ○ | × | ○ |
| Comparative Example 12 | 70 | 0 | 0 | 0 | 30 | 1 | 0 | × | ○ | ○ |

**[Table 5]**

| | Formulation of resin composition (parts by mass) | | | | | | | Transparency | Heat resistance | Flexibility |
|---|---|---|---|---|---|---|---|---|---|---|
| | Alicyclic epoxy compound (A) | | Polyol compound (B) | | | Acid generator (C) | | | | |
| | Celloxide | | Placcel | | | SP-170 | CPI-110A | | | |
| | 2021P | 2081 | 305 | 308 | CD205PL | | | | | |
| Comparative Example 13 | 60 | 0 | 40 | 0 | 0 | 0.01 | 0 | ○ | × | ○ |
| Comparative Example 14 | 60 | 0 | 40 | 0 | 0 | 1 | 0 | × | ○ | ○ |
| Comparative Example 15 | 60 | 0 | 0 | 40 | 0 | 0.01 | 0 | ○ | × | ○ |
| Comparative Example 16 | 60 | 0 | 0 | 40 | 0 | 1 | 0 | × | ○ | ○ |
| Comparative Example 17 | 60 | 0 | 0 | 0 | 40 | 0.01 | 0 | ○ | × | ○ |
| Comparative Example 18 | 60 | 0 | 0 | 0 | 40 | 1 | 0 | × | ○ | ○ |
| Comparative Example 19 | 50 | 0 | 50 | 0 | 0 | 0.01 | 0 | ○ | × | ○ |
| Comparative Example 20 | 50 | 0 | 50 | 0 | 0 | 1 | 0 | × | ○ | ○ |
| Comparative Example 21 | 50 | 0 | 0 | 50 | 0 | 0.01 | 0 | ○ | × | ○ |
| Comparative Example 22 | 50 | 0 | 0 | 50 | 0 | 1 | 0 | × | ○ | ○ |
| Comparative Example 23 | 50 | 0 | 0 | 0 | 50 | 0.01 | 0 | ○ | × | ○ |
| Comparative Example 24 | 50 | 0 | 0 | 0 | 50 | 1 | 0 | × | ○ | ○ |

**[Table 6]**

| | Formulation of resin composition (parts by mass) | | | | | | | Transparency | Heat resistance | Flexibility |
|---|---|---|---|---|---|---|---|---|---|---|
| | Alicyclic epoxy compound (A) | | Polyol compound (B) | | | Acid generator (C) | | | | |
| | Celloxide | | Placcel | | | SP-170 | CPI-110A | | | |
| | 2021P | 2081 | 305 | 308 | CD205PL | | | | | |
| Comparative Example 25 | 90 | 0 | 10 | 0 | 0 | 0.5 | 0 | ○ | ○ | × |
| Comparative Example 26 | 90 | 0 | 0 | 10 | 0 | 0.5 | 0 | ○ | ○ | × |
| Comparative Example 27 | 90 | 0 | 0 | 0 | 10 | 0.5 | 0 | ○ | ○ | × |
| Comparative Example 28 | 30 | 0 | 70 | 0 | 0 | 0.5 | 0 | Not cured | | |
| Comparative Example 29 | 30 | 0 | 0 | 70 | 0 | 0.5 | 0 | Not cured | | |
| Comparative Example 30 | 30 | 0 | 0 | 0 | 70 | 0.5 | 0 | Not cured | | |
| Comparative Example 31 | 0 | 80 | 20 | 0 | 0 | 1 | 0 | × | ○ | ○ |
| Comparative Example 32 | BS575CB | | | | | | | ○ | ○ | × |
| Comparative Example 33 | Lumilar T60 | | | | | | | ○ | × | ○ |

As shown in Tables 1 to 6, the films related to Examples 1 to 38 exhibited excellent performances in all of the transparency, heat resistance and flexibility. In contrast, the films related to Comparative Examples 1 to 33 were found to be unsatisfactory with respect to at least one of the transparency, heat resistance and flexibility.

## Claims

1. A transparent self-supporting film, which has a single layer structure, a thickness within a range of from 1 to 250 µm and is made of a cured product of a resin composition comprising an alicyclic epoxy compound (A), a polyol compound (B) and an acid generator (C), wherein an amount ratio of the alicyclic epoxy compound (A) to the total amount of the alicyclic epoxy compound (A) and the polyol compound (B) is within a range of from 70 to 75 mass%, and an amount of the acid generator (C) is within a range of from 0.05 to 0.1 parts by mass per 100 parts by mass of the alicyclic epoxy compound (A) and the polyol compound (B) in total, and wherein the polyol compound (B) has a number average molecular weight within a range of from 200 to 100,000 g/mol measured as described in the description and a hydroxyl group value within a range of from 190 to 550 KOH mg/g.

2. The film as defined in Claim 1, wherein the alicyclic epoxy compound (A) consists of at least one of 3',4'-epoxycyclohexylmethyl-3,4-epoxycyclohexane carboxylate and ε-caprolactone-modified 3',4'-epoxycyclohexylmethyl-3,4-epoxycyclohexane carboxylate.

3. The film as defined in Claim 1 or 2, wherein the polyol compound (B) consists of at least one of polycaprolactone triol and polycarbonate diol.

4. The film as defined in any one of Claims 1 to 3, wherein the acid generator (C) contains a sulfonium salt.

5. A multilayer film comprising two or more layers constituting a multilayer structure and at least one thereof is made of the film defined in any one of Claims 1 to 4.

6. An optical film comprising the film defined in any one of Claims 1 to 4, and one or more layers selected from the group consisting of a low reflection layer, an anti-glare layer and a hard coat layer and formed on the film.

7. An image display device comprising the film defined in any one of Claims 1 to 4, the multilayer film defined in Claim 5, or the optical film defined in Claim 6.

## Patentansprüche

1. Transparenter selbsttragender Film, der eine Einzelschichtstruktur und eine Dicke im Bereich von 1 bis 250 µm aufweist und aus einem gehärteten Produkt einer Harzzusammensetzung hergestellt ist, die eine alicyclische Epoxidverbindung (A), eine Polyolverbindung (B) und einen Säurebildner (C) umfasst, wobei ein Mengenverhältnis der alicyclischen Epoxidverbindung (A) zur Gesamtmenge der alicyclischen Epoxidverbindung (A) und der Polyolverbindung (B) in einem Bereich von 70 bis 75 Massen-% liegt und eine Menge des Säurebildners (C) in einem Bereich von 0,05 bis 0,1 Masseteilen pro 100 Masseteilen der alicyclischen Epoxidverbindung (A) und der Polyolverbindung (B) insgesamt liegt, und wobei die Polyolverbindung (B) ein zahlengemitteltes Molekulargewicht innerhalb eines Bereichs von 200 bis 100 000 g/mol, gemessen wie in der Beschreibung beschrieben, und einen Hydroxylgruppenwert innerhalb eines Bereichs von 190 bis 550 KOH mg/g aufweist.

2. Film nach Anspruch 1, wobei die alicyclische Epoxidverbindung (A) aus mindestens einem aus 3',4'-Epoxycyclohexylmethyl-3,4-epoxycyclohexancarboxylat und ε-Caprolacton-modifiziertem 3',4'-Epoxycyclohexylmethyl-3,4-epoxycyclohexancarboxylat besteht.

3. Film nach Anspruch 1 oder 2, wobei die Polyolverbindung (B) aus mindestens einem aus Polycaprolactontriol und Polycarbonatdiol besteht.

4. Film nach einem der Ansprüche 1 bis 3, wobei der Säurebildner (C) ein Sulfoniumsalz enthält.

5. Mehrschichtfilm, der zwei oder mehr Schichten umfasst, die eine Mehrschichtstruktur bilden, und von denen mindestens einer aus der in einem der Ansprüche 1 bis 4 definierten Film hergestellt ist.

6. Optischer Film, umfassend den in einem der Ansprüche 1 bis 4 definierten Film und eine oder mehrere Schichten ausgewählt aus der Gruppe bestehend aus einer reflexionsarmen Schicht, einer Blendschutzschicht und einer Hartbeschichtungsschicht, die auf dem Film gebildet sind.

7. Bildanzeigevorrichtung, umfassend den in einem der Ansprüche 1 bis 4 definierten Film, den in Anspruch 5 definierten Mehrschichtfilm oder den in Anspruch 6 definierten optischen Film.

## Revendications

1. Film autoportant transparent, qui a une structure monocouche, une épaisseur située dans la plage allant de 1 à 250 µm, et qui est fait d'un produit durci d'une composition de résine comprenant un composé époxy alicyclique (A), un composé polyol (B) et un générateur d'acide (C), dans lequel le rapport de la quantité du composé époxy alicyclique (A) à la quantité totale du composé époxy alicyclique (A) et du composé polyol (B) est situé dans la plage allant de 70 à 75 % en masse, et la quantité du générateur d'acide (C) est située dans la plage allant de 0,05 à 0,1 partie en masse pour 100 parties en masse au total du composé époxy alicyclique (A) et du composé polyol (B), et dans lequel le composé polyol (B) a une masse moléculaire moyenne en nombre, mesurée comme décrit dans la description, située dans la plage allant de 200 à 100 000 g/mol, et un indice d'hydroxyle situé dans la plage allant de 190 à 550 mg KOH/g.

2. Film selon la revendication 1, dans lequel le composé époxy alicyclique (A) consiste en au moins l'un parmi le carboxylate de 3',4'-époxycyclohexylméthyl-3,4-époxycyclohexane et le carboxylate de 3',4'-époxycyclohexylméthyl-3,4-époxycyclohexane modifié par de l'ε-caprolactone.

3. Film selon la revendication 1 ou 2, dans lequel le composé polyol (B) consiste en au moins l'un parmi le polycaprolactone-triol et le polycaprolactone-diol.

4. Film selon l'une quelconque des revendications 1 à 3, dans lequel le générateur d'acide (C) contient un sel de sulfonium.

5. Film multicouche comprenant deux ou plus de deux couches constituant une structure multicouche dont au moins l'une est faite du film défini dans l'une quelconque des revendications 1 à 4.

6. Film optique comprenant le film défini dans l'une quelconque des revendications 1 à 4 et une ou plusieurs couches choisies dans le groupe constitué par une couche basse réflexion, une couche antireflet et une couche de revêtement dur, et formées sur le film.

7. Dispositif d'affichage d'images comprenant le film défini dans l'une quelconque des revendications 1 à 4, le film multicouche défini dans la revendication 5, ou le film optique défini dans la revendication 6.
